# EUROPEAN PATENT SPECIFICATION

(11) **EP 2 685 067 B1**
(45) Date of publication and mention of the grant of the patent: **05.09.2018**
(21) Application number: 13175845.0
(22) Date of filing: 10.07.2013
(51) Int. Cl.: F02C 7/18, F02C 9/18, F04D 27/02

(54) **Method and arrangement for gas turbine engine surge control**
Verfahren und Anordnung zur Steuerung des Pumpens einer Gasturbine
Procédé et agencement pour commander le pompage dans une turbine à gaz

(30) Priority: 13.07.2012 EP 12176464
(43) Date of publication of application: 15.01.2014
(73) Proprietor: Ansaldo Energia IP UK Limited, London W1G 9DQ (GB)
(72) Inventor: Studerus, Adrien Franz, 5400 Baden (CH); Steiger, Ulrich Robert, 5405 Baden-Daettwil (CH); Jakoby, Ralf, 5243 Muelligen (CH); Waelchli, René, 5013 Niedergoesgen (CH)
(74) Representative: Bernotti, Andrea

(56) References cited:
- EP-A2- 0 274 341
- EP-A2- 1 186 761
- EP-A2- 2 224 114
- DE-A1-102004 040 183
- US-A- 4 907 406
- US-A1- 2010 154 434

## Description

### TECHNICAL FIELD

The invention relates to methods and arrangements for compressor surge control and in particular to surge control of gas turbine engines.

### BACKGROUND INFORMATION

A gas turbine engine, whether they are designed as aircraft engines or for industrial use for power generation, commonly comprise a compressor, a combustor and a turbine. An example of one arrangement is described in DE2702440 A1. The described gas turbine engine comprises a first and a second sequential combustor and a high pressure turbine located between the combustors and a low pressure turbine located after the second combustor. Due to the combustion temperatures reached in the combustor components in the hot gas path typically include a cooling system. A characteristic of these cooling systems is that the cooling medium is typically at least partially ejected into the hot gas path and thus mixes with the combustion gases.

For efficient operation it is often necessary for gas turbines to operate near a compressor surge point. As a result, during unsteady state transient operation such as load changes but in particular during start-up and shutdown, there is an increased risk of surge. Methods for the measurement of compressor conditions for the onset of surge are well known in the art. These measures are typically used to take corrective action to prevent the onset of surge.

An example of surge control is discussed in US patent application no. US 4,756,152A. The method discussed involves modulating the bleed from a compressor during unsteady state operation to prevent surge. Typically, however, this bleed represents an energy loss from the system and therefore contributes to an overall loss of efficiency of the gas turbine engine.
The US 4 907 406 A describes a method in which a gas turbine engine is monitored for a potential surge condition; and in which a blow-off valve is controlled to avoid a surge condition in the compressor of the gas turbine engine by directing a blow-off flow to the exhaust system of the gas turbine engine. DE1 02004040183 A1 discloses a sequential combustion gas turbine engine.

### SUMMARY

A surge control method for a gas turbine is disclosed that enables the gas turbine to operate with improved efficiency while actively preventing compressor surging.

The invention attempts to address-this problem by means of the subject matter of the independent claims. Advantageous embodiments are given in the dependent claims.

The disclosure is based on the general idea of controllably directing blow-off air from a compressor to the cooling system of a gas turbine engine based on a monitored surge condition.

An aspect provides a gas turbine surge control method. The method comprises providing, a gas turbine engine having a compressor, a combustor that is downstream of the compressor and has a hot gas path, and a turbine downstream of the combustor that also has a hot gas path. The hot gas path of a combustor is the section of the flow path in which hot combustion gas flows inside the combustor from the flame or chemical heat releasing reaction to the combustor exit. The hot gas path of a turbine is the flow path for hot gasses from the turbine inlet, which is connected to the combustor exit, to the turbine exit. The method further comprises monitoring the gas turbine engine for a potential surge condition, controlling a blow-off flow from the compressor for the control purpose of avoiding the surge condition based on the monitoring, and directing the blow-off flow to the hot gas paths so as to bypass at least a portion of the combustor.

In a further aspect of the method the blow-off flow is controlled, by a modulating control valve, between the extremes of full flow and no flow.

In a further aspect of the controlling is closed loop control and the monitoring is used as feedback for the closed loop control.

In a further aspect the control step is performed during start-up of the gas turbine engine.

In an alternative aspect the control step is performed while shutting down the gas turbine engine.

In another alternative aspect the control step is performed during load changes of the gas turbine engine.

A further aspect includes the step of providing the turbine with a cooling system for cooling turbine components exposed to the hot gas path wherein the blow-off flow is directed into the cooling system

In another aspect the method further includes providing the gas turbine engine with, a first combustor that is fluidly downstream of the compressor, and a second combustor that is fluidly downstream of the first and has a hot gas path. For this provided gas turbine engine the controlling step includes directing at least a portion of the blow-off into the hot gas path when the first combustor is online and the second combustor is offline.

In an aspect, the method further includes the steps of, providing the turbine with a diffuser at a downstream end of the turbine, controlling a further blow-off flow from the compressor based on the monitoring for the purpose of avoiding the surge condition, and directing the further blow-off flow to the diffuser.

Another aspect provides a gas turbine engine comprising:
- a compressor,
- a first combustor that is fluidly downstream of the compressor,
- a first turbine that is fluidly downstream of the first combustor,
- a second combustor that is fluidly downstream of the first turbine and has a hot gas path, and
- a second turbine that is fluidly downstream of the second combustor. In addition, the gas turbine engine includes a blow-off line. The blow-off line has a first end in fluid communication with the compressor and a second end in fluid communication with the second combustor wherein the blow-off line is located and configured to enable a bypass blow-off flow from the compressor into the hot gas path.

A further aspect comprises a control valve, in the blow-off line, for modulating a gas flow through the blow-off line.

In a further aspect, the second combustor has a cooling system and the blow-off line is configured and arranged to bypass the cooling system so as to enable ejection of blow-off flow into the hot gas path independently of the cooling system.

It is a further object of the invention to overcome or at least ameliorate the disadvantages and shortcomings of the prior art or provide a useful alternative.

Other aspects and advantages of the present disclosure will become apparent from the following description, taken in connection with the accompanying drawings, which by way of example illustrate exemplary embodiments of the present invention

### BRIEF DESCRIPTION OF THE DRAWINGS

By way of example, embodiments of the present disclosure are described more fully hereinafter with reference to the accompanying drawings, in which:
Figure 1 is a schematic of a gas turbine engine arrangement; and
Figure 2 is a schematic of the gas turbine engine of Fig. 1 additionally showing a two combustor, two turbine arrangement and optional dual blow-off flows.

### DETAILED DESCRIPTION

Exemplary embodiments of the present disclosure are now described with reference to the drawings, wherein like reference numerals are used to refer to like elements throughout. In the following description, for purposes of explanation, numerous specific details are set forth to provide a thorough understanding of the disclosure. However, the present disclosure may be practiced without these specific details, and is not limited to the exemplary embodiments and methods disclosed herein.

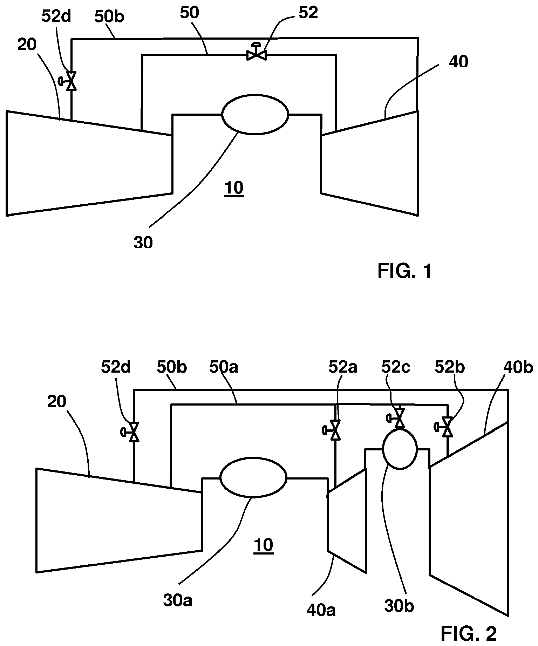

Fig. 1 shows a general gas turbine engine 10 arrangement to which exemplary methods not forming part of the invention may be applied. The gas turbine engine 10 comprises a compressor 20 for compressing combustion air. Fluidly connected downstream of the compressor 20 is a combustor 30 in which air from the compressor 20 is mixed with not-shown fuel. Hot combustion gases from the combustor 30 are then expanded through a turbine 40. Due to the high temperature achieved in the combustor 30, known gas turbine engines 10 of this configuration include cooling systems for components in the combustion gas flow path (referenced in this specification as the hot gas path). These cooling systems commonly include ejecting cooling air, which first passes through internal cooling passages, through numerous cooling holes into the hot gas path where it is mixed with combustion gases. Within this specification, reference to cooling systems specifically refers to systems that include the feature of ejection of the cooling medium through components exposed to the hot gas path into the hot gas path wherein exposed refers to the condition of being in direct thermal contact with the gas flowing through the hot gas path.

Fig. 1 further shows a blow-off line 50 from which at least partially compressed gas, that is, gas taken after the first stage of compression anywhere ranging from an intermediate stage to after the final stage, is extracted and directed into a not-shown cooling system so as to bypass at least a portion of the combustor 30. In this context, bypass means to circumflow a portion of the flow path the bulk of the working fluid takes as it flows from the compressor 20 through the combustor 30 and turbine 40. As a consequence of the configuration of the cooling system, the bypass gas enters the hot gas flow path of the gas turbine 40 engine 10 via the cooling system and mixes with combustion gases. A control valve 52, located in the blow-off line 50, may be used to incrementally modulate the blow-off flow through the blow-off line 50 at any rate ranging from no flow up to full flow that is limited only by the configuration of the line and the relative pressure difference of the compressor 20 and cooling system operating pressure.

An exemplary surge control method that maybe applied to the gas turbine 40 engine 10 of Fig. 1 includes monitoring the gas turbine engine 10 for a potential surge condition. In this context, monitoring includes any known direct and/or indirect determination of the potential risk of the compressor 20 of the gas turbine engine 10 to surge. Monitoring, therefore, includes monitoring physical conditions, such as flow-rate and composition, pressure, including compression ratio, and temperature, and applying algorithms, as known in the art that have been developed either empirically or experimentally, to identify potential surge. Monitoring also includes the simple identification of an operating condition that is known through experience of the gas turbine engine 10 operator/ designer to potentially result in a surge event. Such operations include, but are not limited to, unsteady state operation such as start-up, shutdown or significant load/ rate changes.

Based on the monitored surge condition, an exemplary surge method further includes controlling a blow-off flow from the compressor 20 to the turbine cooling system for the control purpose of avoiding the surge condition. Controlling includes varying the blow-off flow-rate. When applied to the exemplary gas turbine 40 engine 10 of Fig. 1, the blow-off flow is directed through the blow-off line 50, 50a.

By directing the blow-off flow into the cooling system, the blow-off flow is ejected into the hot gas path of the turbine 40 so as to enable it's expansion through the turbine 40. By expanding the blow-off flow in this way some of the pressure energy of the blow-off flow is recovered thus improving the overall efficiency of the gas turbine engine 10. In an exemplary method, the blow-off flow is directed into the cooling system of the turbine 40.

In an exemplary method, the control is realised by a modulating control valve 52 located in the blow-off line 50. A modulating control valve 52 differs from an on/ off or open/shut valve by its capability of controllably and predictably varying flow-rate in increments between the extremes of full flow and no flow. The advantage of a modulating control valve 52 is that it makes it possible to limit the quantity of blow-off flow to the minimum required to prevent surge. This results in smoother operation as compared to on/off control and reduces energy loss. Even if blow-off flow is expanded through the turbine 40, it is more efficient to expand compressed gas through the gas turbine 40 engine 10 flow path than via the blow-off line 50 and thus, for reasons of efficiency, it may be preferable to reduce the blow-off rate.

In a further exemplary method, the control is by means of closed loop control utilising the modulating control valve 52 as a control variable and the monitored surge condition as the process variable. This has the advantage of potentially reducing the amount of blow-off flow resulting in the discussed smoother operation and improved efficiency.

In exemplary methods, the surge control is used during any unsteady state operation that may result in a compressor 20 surge condition. Such operations include, but are not limited to, start-up, shutdown and load changes.

Fig. 2 shows additional features of an exemplary embodiment of a gas turbine engine 10 to which exemplary methods of the invention maybe applied. In addition to the basic components of a gas turbine engine 10 shown Fig. 1, the combustor 30 of an exemplary embodiment shown in Fig. 2 further comprises a first combustor 30a and a second combustor 30b. In addition, the second combustor 30b includes hot gas path and a cooling system for cooling components exposed to the hot gas path. This cooling system is of the same type used in the turbine 40 shown in Fig. 1. That is, the cooling system ejects cooling medium into the hot gas path. The turbine 40 of the exemplary embodiment further comprises a first turbine 40a that is fluidly located between the first combustor 30a and a second combustor 30b which is located fluidly downstream of the first combustor 30a. The exemplary embodiment includes a blow-off line 50a that is configured to optionally direct blow-off flow into the cooling systems of the first turbine 40a, the second combustor 30b and/or the second turbine 40b.

In a further exemplary embodiment shown in Fig. 2 that maybe applied to any exemplary cooling system arrangement, control valves 52a, 52b, 52c are located in the blow-off line 50a so as to enable individual control of the amount of blow directed into each connected cooling system. This makes it possible to balance the relative loadings of the various cooling systems while maintaining the objective of compressor surge control.

In an exemplary method applied to embodiments included in Fig. 2, when the first combustor 30a is online and the second combustor 30b is offline, surge control is at least partially achieved by controlled blow-off flow to the second combustor cooling system. Within this specification, an online combustor 30 is defined as a combustor 30 to which fuel is being fed while an offline combustor 30 is defined as a combustor 30 to which fuel is not being fed.

A further exemplary method includes the step of an additional blow-off flow that is realised through an additional blow-off line 50b. In an exemplary embodiment, this additional blow-off flow is directed to a diffuser of the turbine 40 of the gas turbine engine 10. The additional blow-off flow makes it possible to increase the total amount of blow-off flow in order to avoid a potential surge condition when, due to operating concerns, the blow-off flow cannot be solely directed to cooling systems. A further exemplary method provides a control valve 52d in the additional blow-off line 50b.

Although the disclosure has been herein shown and described in what is conceived to be the most practical exemplary methods and embodiments, it will be appreciated by those skilled in the art that the present disclosure can be embodied in other specific forms without departing from the essential characteristics thereof. The presently disclosed embodiments and methods are therefore considered in all respects to be illustrative and not restricted. The scope of the disclosure is indicated by the appended claims rather than the foregoing description and all changes that come within the meaning and range and equivalences thereof are intended to be embraced therein.

### REFERENCE NUMBERS

- 10: gas turbine engine
- 20: compressor
- 30,30a-b: combustor
- 40,40a-b: turbine
- 50,50a-b: blow-off line
- 52,52a-d: control valve

## Claims

1. A gas turbine engine (10) comprising:
a compressor (20);
a first combustor (30a), fluidly downstream of the compressor (20);
a first turbine (40a), fluidly downstream of the first combustor (30a);
a second combustor (30b), fluidly downstream of the first turbine (40a), having a hot gas path,
a second turbine (40b) fluidly downstream of the second combustor (30b); and
a blow-off line (50a), with a first end in fluid communication with the compressor, and a second end in fluid communication with the second combustor (30b), wherein the blow-off line (50a) is located and configured to enable a blow-off flow from the compressor (20) into said hot gas path, and
wherein the gas turbine engine further comprises a control valve (52), in the blow-off line (50a), for modulating a gas flow through the blow-off line, and
wherein the second combustor (30b) has a cooling system, **characterized in that** the blow-off line (50a) is configured and arranged to bypass the cooling system so as to enable ejection of blow-off flow into the second combustor hot gas path independently of the cooling system.

2. A surge control method of a gas turbine engine, the method comprising the steps of:
providing a gas turbine engine (10) according to claim 1, monitoring the gas turbine engine (10) for a potential surge condition;
controlling a blow-off flow from the compressor (20), based on the monitoring, for a control purpose of avoiding the surge condition; and
directing the blow-off flow to at least the hot gas path of the second combustor (30b) so as to bypass at least a portion of the second combustor (30b).

3. The method of claim 2, wherein the blow-off flow is controlled, by a provided modulating control valve (52), between the extremes of full flow and no flow.

4. The method of claim 3, wherein the controlling is closed loop control and the monitoring is used as feedback for the controller.

5. The method of claim 2 or 4, wherein the controlling is performed during start-up of the gas turbine engine (10).

6. The method of claim 2 or 4, wherein the control step is performed while shutting down the gas turbine engine (10).

7. The method of claim 2 or 4, wherein the control step is performed during load changes of the gas turbine engine (10).

8. The method of any one of claims 2 to 7 including the step of providing a turbine (40a, 40b) with a cooling system for cooling turbine components exposed to the hot gas path wherein the blow-off flow is directed into the cooling system.

9. The method of any one of claims 2 to 7 further directing the blow-off flow into the hot gas path of the second combustor when the first combustor (30a) is online and the second combustor (30b) is offline.

10. The method of any one of claims 2 to 9 further including the steps of:
providing the first or second turbine (40a,40b) with a diffuser at a downstream end of the turbine (40a, 40b);
controlling a further blow-off flow from the compressor (20) based on the monitoring for the purpose of avoiding the surge condition; and directing the further blow-off flow to the diffuser.

## Patentansprüche

1. Gasturbinentriebwerk (10), umfassend:
einen Verdichter (20);
eine erste Brennkammer (30a), fluidisch abströmseitig des Verdichters (20);
eine erste Turbine (40a), fluidisch abströmseitig der ersten Brennkammer (30a);
eine zweite Brennkammer (30b), fluidisch abströmseitig der ersten Turbine (40a) mit
einem Heißgaspfad,
eine zweite Turbine (40b) abströmseitig der zweiten Brennkammer (30b); und
eine Abblasleitung (50a) mit einem ersten Ende, das mit dem Verdichter in Fluidverbindung steht, und einem zweiten Ende, das mit der zweiten Brennkammer (30b) in Fluidverbindung steht,
wobei die Abblasleitung (50a) so angeordnet ist, dass sie einen Abblasstrom von dem Verdichter (20) in den Heißgaspfad ermöglicht, wobei das Gasturbinentriebwerk zudem ein in der Abblasleitung (50a) vorgesehenes Steuerventil (52) umfasst, das dazu dient, einen Gasstrom durch die Abblasleitung (50a) zu modulieren, und die zweite Brennkammer (30b) ein Kühlsystem aufweist, **dadurch gekennzeichnet, dass** die Abblasleitung (50a) so angeordnet ist, dass sie das Kühlsystem umgeht, um den Ausstoß des Abblasstromes in den Heißgaspfad der zweiten Brennkammer unabhängig von dem Kühlsystem zu ermöglichen.

2. Verfahren zur Steuerung des Verdichterpumpens eines Gasturbinentriebwerks, wobei das Verfahren folgende Schritte umfasst:
Bereitstellen eines Gasturbinentriebwerks (10) nach Anspruch 1,
Überwachen des Gasturbinentriebwerks (10) in Bezug auf ein mögliches Pumpverhalten;
Regeln eines Abblasstromes des Verdichters (20) entsprechend der Überwachung zur Vermeidung des Pumpverhaltens; und
Leiten des Abblasstromes in mindestens den Heißgaspfad der zweiten Brennkammer (30b) zur Umgehung mindestens eines Abschnitts der zweiten Brennkammer (30b).

3. Verfahren nach Anspruch 2, wobei der Abblasstrom mittels eines vorgesehenen modulierenden Steuerventils (52) zwischen den zwei Extremen voller Strom und kein Strom geregelt wird.

4. Verfahren nach Anspruch 3, wobei es sich bei der Regelung um eine Regelung mit geschlossener Rückführung handelt und die Überwachung als Rückführung für den Regler dient.

5. Verfahren nach Anspruch 2 oder 4, wobei die Regelung während des Anfahrens des Gasturbinentriebwerks (10) durchgeführt wird.

6. Verfahren nach Anspruch 2 oder 4, wobei der Schritt der Regelung während des Abschaltens des Gasturbinentriebwerks (10) durchgeführt wird.

7. Verfahren nach Anspruch 2 oder 4, wobei der Schritt der Regelung während des Lastwechsels des Gasturbinentriebwerks (10) durchgeführt wird.

8. Verfahren nach einem der Ansprüche 2 bis 7, das zudem den Schritt umfasst, dass eine Turbine (40a, 40b) mit einem Kühlsystem zur Kühlung von Turbinenbauteilen versehen wird, die dem Heißgaspfad ausgesetzt sind, wobei der Abblasstrom in das Kühlsystem geleitet wird.

9. Verfahren nach einem der Ansprüche 2 bis 7, das zudem den Schritt umfasst, in dem der Abblasstrom in den Heißgaspfad der zweiten Brennkammer geleitet wird, wenn die erste Brennkammer (30a) in Betrieb ist und die zweite Brennkammer (30b) nicht in Betrieb ist.

10. Verfahren nach einem der Ansprüche 2 bis 9, das zudem folgende Schritte umfasst:
Versehen der ersten oder der zweiten Turbine (40a, 40b) mit einem Diffusor an einem abströmseitigen Ende der Turbine (40a, 40b);
Regeln eines weiteren Abblasstromes des Verdichters (20) entsprechend der Überwachung zur Vermeidung des Pumpverhaltens; und
Leiten des weiteren Abblasstromes zu dem Diffusor.

## Revendications

1. Moteur à turbine à gaz (10) comprenant :
un compresseur (20) ;
une première chambre de combustion (30a), située de manière fluidique en aval du compresseur (20) ;
une première turbine (40a), située de manière fluidique en aval de la première chambre de combustion (30a) ;
une seconde chambre de combustion (30b), située de manière fluidique en aval de la première turbine (40a), qui présente un chemin des gaz chauds ;
une seconde turbine (40b) située de manière fluidique en aval de la seconde chambre de combustion (30b) ; et
une conduite d'évacuation (50a), dont une première extrémité est en communication de fluide avec le compresseur, et dont la seconde extrémité est en communication de fluide avec la seconde chambre de combustion (30b) ;
dans lequel la conduite d'évacuation (50a) est située et configurée de façon à permettre un flux d'évacuation à partir du compresseur (20) dans ledit chemin des gaz chauds ; et
dans lequel le moteur à turbine à gaz comprend en outre une soupape de commande (52), qui se situe dans la conduite d'évacuation (50a), destinée à moduler le flux de gaz dans la conduite d'évacuation ; et
dans lequel la seconde chambre de combustion (30b) présente un système de refroidissement ;
**caractérisé en ce que** :
la conduite d'évacuation (50a) est configurée et agencée de façon à éviter le système de refroidissement de manière à permettre l'éjection du flux d'évacuation dans le chemin des gaz chauds de la seconde chambre de combustion indépendamment du système de refroidissement.

2. Procédé de contrôle de surpression d'un moteur à turbine à gaz, le procédé comprenant les étapes consistant à :
fournir un moteur à turbine à gaz (10) selon la revendication 1 ;
surveiller un état potentiel de surpression du moteur à turbine à gaz (10) ;
commander le flux d'évacuation en provenance du compresseur (20), sur la base de la surveillance, dans le but d'éviter l'état de surpression ; et
diriger le flux d'évacuation au moins vers le chemin des gaz chauds de la seconde chambre de combustion (30b) de façon à éviter une partie au moins de la seconde chambre de combustion (30b).

3. Procédé selon la revendication 2,
dans lequel le flux d'évacuation est commandé, par une soupape de commande de modulation (52) prévue, entre un plein écoulement et aucun écoulement.

4. Procédé selon la revendication 3,
dans lequel la commande est une commande en boucle fermée, et la surveillance est utilisée en tant que rétroaction du contrôleur.

5. Procédé selon la revendication 2 ou la revendication 4,
dans lequel l'étape de commande est exécutée au cours de la mise en route du moteur à turbine à gaz (10).

6. Procédé selon la revendication 2 ou la revendication 4,
dans lequel l'étape de commande est exécutée tout en arrêtant le moteur à turbine à gaz (10).

7. Procédé selon la revendication 2 ou la revendication 4,
dans lequel l'étape de commande est exécutée au cours des modifications de charge du moteur à turbine à gaz (10).

8. Procédé selon l'une quelconque des revendications 2 à 7, comprenant l'étape consistant à doter une turbine (40a, 40b) d'un système de refroidissement destiné à refroidir les composants de la turbine exposés au chemin des gaz chauds, dans lequel le flux d'évacuation est dirigé dans le système de refroidissement.

9. Procédé selon l'une quelconque des revendications 2 à 7, comprenant en outre une étape consistant à diriger le flux d'évacuation dans le chemin des gaz chauds de la seconde chambre de combustion, lorsque la première chambre de combustion (30a) est en ligne, et lorsque la seconde chambre de combustion (30b) est hors ligne.

10. Procédé selon l'une quelconque des revendications 2 à 9, comprenant en outre les étapes consistant à :
doter la première turbine ou la seconde turbine (40a, 40b) d'un diffuseur au niveau d'une extrémité aval de la turbine (40a, 40b) ;
commander un flux d'évacuation supplémentaire en provenance du compresseur (20), sur la base de la surveillance, dans le but d'éviter l'état de surpression ; et
diriger le flux d'évacuation supplémentaire vers le diffuseur.
